# EUROPEAN PATENT SPECIFICATION

(11) **EP 4 397 880 B1**
(45) Date of publication and mention of the grant of the patent: **28.05.2025**
(21) Application number: 23190625.6
(22) Date of filing: 09.08.2023
(51) Int. Cl.: F16D 65/00

(54) **BRAKE DUST COLLECTOR**
BREMSSTAUBSAMMLER
COLLECTEUR DE POUSSIÈRE DE FREIN

(30) Priority: 09.01.2023 KR 20230002890
(43) Date of publication of application: 10.07.2024
(73) Proprietor: HL Mando Corporation, Pyeongtaek-si, Gyeonggi-do 17962 (KR)
(72) Inventor: HUR, Jaejin, 13455 Seongnam-si, Gyeonggi-do (KR)
(74) Representative: BCKIP Part mbB

(56) References cited:
- WO-A1-2022/219849
- DE-A1- 10 336 984
- DE-A1- 102020 111 811
- DE-A1- 102020 126 890
- KR-A- 20220 163 108
- US-A1- 2010 065 387
- US-A1- 2014 054 120
- US-A1- 2018 031 059
- US-A1- 2021 033 157

## Description

### TECHNICAL FIELD

The present invention relates to a brake dust collector, and more particularly, to a brake dust collector for collecting dust caused by friction between a brake pad and a disc during a braking operation.

### BACKGROUND

As the importance of environmental protection is emphasized, environmental friendliness has become a big issue in the automobile industry, and regulations on pollutants emitted from automobiles are also being continuously strengthened.

Meanwhile, pollutants emitted from vehicles may be largely classified into pollutants emitted from an exhaust system and pollutants emitted from a non-exhaust system. The pollutants emitted from the exhaust system are pollutants contained in exhaust gas, which is generated when an engine of a vehicle is driven, and are already subject to regulations, while the pollutants emitted from the non-exhaust system are expected to be subject to corresponding regulations.

Specifically, among the pollutants emitted from the non-exhaust system, dust generated due to abrasion caused by a frictional force between a brake pad and a disc during vehicle braking contains a large amount of harmful substances, so that a method for minimizing the dust is required in line with the fact that regulations on harmful dust and fine dust are gradually tightening.

In addition, since a fixed-type caliper brake including a monoblock caliper usually provides a relatively stable braking power even in high-speed repetition, vehicle models to which the fixed-type caliper brake is applied are relatively high-performance vehicles and a large amount of dust is generated between discs and brake pads, and thus a method of reducing the dust is required all the more urgently.

Meanwhile, in order to meet the requirement, the conventional dust collector is provided as a separate device for dust collection on one side of a caliper housing, which reduces aesthetics and also reduces maintainability because the device body should be removed from the vehicle to clean or replace the filter.

An example of state of the art dust collectors is shown in document DE 103 36 984 A1.

### SUMMARY

Therefore, it is an object of the present invention to provide a brake dust collector capable of effectively collecting dust that is generated by friction between a disc and a brake pad and discharged to the outside of a housing.

To this end, the present invention provides a brake dust collector in accordance with claim 1. Advantageous embodiments are subject to the dependent claims and will be set forth in the description which follows and the drawings.

It is one of the ideas of the present invention to provide brake dust collector including a housing that partially surrounds a brake module, and at least one filter module. The brake module comprises a disc that is rotatable about a rotational axis and that has opposite side surfaces or friction surfaces, and a pair of brake pads that are moveable into contact with the side surfaces of the disc to brake the disc. The housing extends along a circumferential direction that extends about the rotational axis. The housing comprises a first portion or leading portion forming one circumferential end region of the housing, and a second portion or trailing portion forming an opposite circumferential end region of the housing. At least one filter is detachably mounted to the housing in at least one of the trailing portion or the leading portion of the housing.

In accordance with one embodiment of the present invention, a brake dust collector includes: a brake module including a pair of brake pads that are respectively disposed on both sides of a disc configured for rotating together with a wheel and are in close contact with or separated from the disc according to a forward and backward movement of a piston; a housing including a base bracket fastened to the brake module, an inner housing fastened to the base bracket, and an outer housing fastened to the inner housing and configured to cover a part of the brake module by providing filter module detachable portions in a circumferential direction of the disc in a leading portion and a trailing portion, respectively; and filter modules provided to be detachable from the filter module detachable portions, respectively.

Each of the filter module detachable portions may be provided across the inner housing and the outer housing.

Each of the filter modules may include a filter cover detachably provided for the filter module detachable portion and at least one filter provided inside the filter cover.

One side of the filter cover may be detachable from the outer housing and the other side of the filter cover may be detachable from the inner housing.

The filter may include a main filter provided in the circumferential direction of the disc inside the filter cover, and a sub filter provided to a side of the inner housing inside the filter cover, and the sub filter may be fastened to an inner side of the inner housing.

The filter module may further include a dust cup provided below the filter, and the dust cup may be fastened to an inner end of each of the leading portion and the trailing portion. Generally, a dust cap may be provided that has an opening, wherein the dust cap may be positioned adjacent to the filter with respect to the circumferential direction of the disc, and the opening of the dust cap may face the filter to collect dust escaping from the filter.

The filter module may further include at least one guide wing that is provided on a side surface or a circumferential surface of the disc and induces a fluid flow to the filter, and the guide wing may be provided to be angle-adjustable for the filter.

The housing may further include a plurality of heat dissipation holes provided between the filter module detachable portions.

In accordance with one aspect of the present invention, a brake dust collector includes: a brake module including a pair of brake pads that are respectively disposed on both sides of a disc configured for rotating together with a wheel and are in close contact with or separated from the disc according to a forward and backward movement of a piston; a housing formed to cover a part of the brake module by providing a filter module detachable portion in a circumferential direction of the disc in at least one of a leading portion or a trailing portion; and one or more, in particular, two filter modules detachably provided for the filter module detachable portion.

The housing may comprise a first filter module detachable portion formed in the leading portion and a second filter module detachable portion formed in the trailing portion, and wherein a first filter module is detachably fastened to the first filter module detachable portion, and a second filter module is detachably fastened to the second filter module detachable portion.

The filter module may include a filter cover detachably provided for the filter module detachable portion and at least one filter provided inside the filter cover.

One side of the filter cover may be detachable from one side surface of the housing and the other side of the filter cover may be detachable from the other side surface of the housing.

The filter module may further include a dust cup provided below the filter, and the dust cup may be fastened to at least one of an inner end of the leading portion or an inner end of the trailing portion.

The filter module may further include at least one guide wing that is provided on a side surface or a circumferential surface of the disc and induces a fluid flow to the filter, and the guide wing may be provided to be angle-adjustable for the filter.

The housing may be provided as a monoblock integrally formed with a case of the brake module.

The housing may further include a plurality of heat dissipation holes.

According to the present invention, as the brake dust collector has a filter module provided in one or both of a leading portion and a trailing portion, the brake dust collector is capable of improving dust collection efficiency by a filter module.

It is a further advantage of the invention that filter cleaning and replacement is facilitated and maintainability is improved because a filter module is provided detachable from a housing.

According to an embodiment of the invention, the brake dust collector is capable of further improving dust collection efficiency by a dust cup that is provided at a lower side of a filter module to finally collect dust discharged to the outside of a housing.

According to a further embodiment of the invention, the brake dust collector is capable of further improving dust collection efficiency by a guide wing that is provided inside a filter module to control a fluid flow.

According to still another embodiment, the brake dust collector is capable of preventing aesthetics of a housing from being reduced by a filter module that is separately provided at one side of the housing.

According to yet another embodiment, the brake dust collector is capable of further improving heat dissipation performance when exhausting heat caused by friction between a disc and a brake pad to outside of a housing.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is an exploded perspective view of a brake dust collector in accordance with one embodiment of the present invention;
FIG. 2 is a view illustrating a state where a filter module of the brake dust collector in accordance with one embodiment of the present invention is separated;
FIG. 3 is a front perspective view illustrating the brake dust collector in accordance with one embodiment of the present invention;
FIG. 4 is a rear perspective view illustrating the brake dust collector in accordance with one embodiment of the present invention;
FIG. 5 is a bottom perspective view illustrating the brake dust collector in accordance with one embodiment of the present invention;
FIG. 6 is a view illustrating a state where dust is collected by the brake dust collector in accordance with one embodiment of the present invention;
FIGS. 7A and 7B are views illustrating a guide wing of the brake dust collector in accordance with one embodiment of the present invention and a fluid flow induced by the guide wing; and
FIGS. 8A to 8C are views illustrating the guide wing of the brake dust collector in accordance with one embodiment of the present invention and the fluid flow induced by the guide wing.

### DETAILED DESCRIPTION

Hereinafter, embodiments of the present invention will be described in detail with reference to the accompanying drawings. The following embodiments are provided to fully convey the present invention to a person having ordinary skill in the art to which the present invention belongs. The present invention is not limited to the embodiment shown herein but may be embodied in other forms. The drawings may omit the illustration of parts not related to the description in order to clarify the present invention, and slightly exaggerate the size of the components to help understanding.

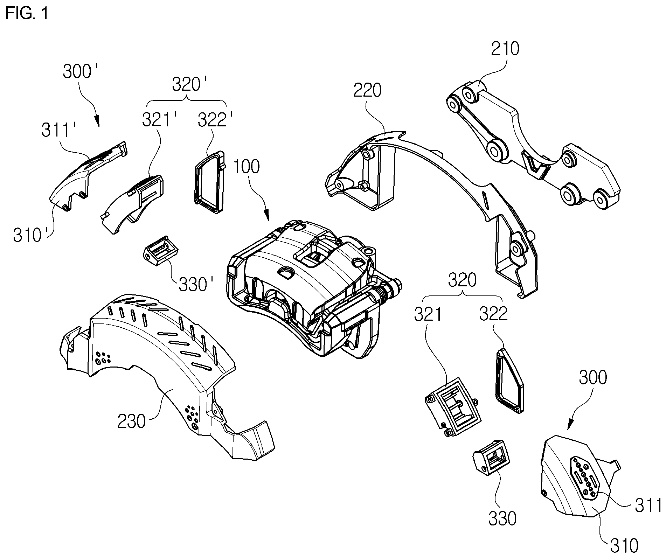

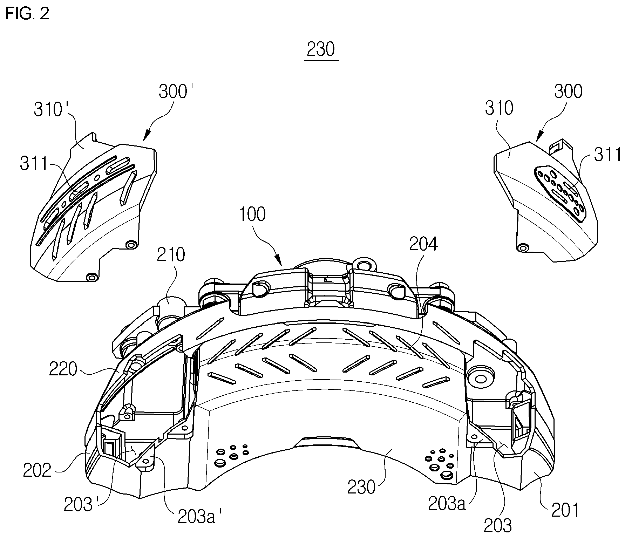

FIG. 1 is an exploded perspective view of a brake dust collector, and FIG. 2 is a view illustrating a state where a filter module of the brake dust collector i is separated.

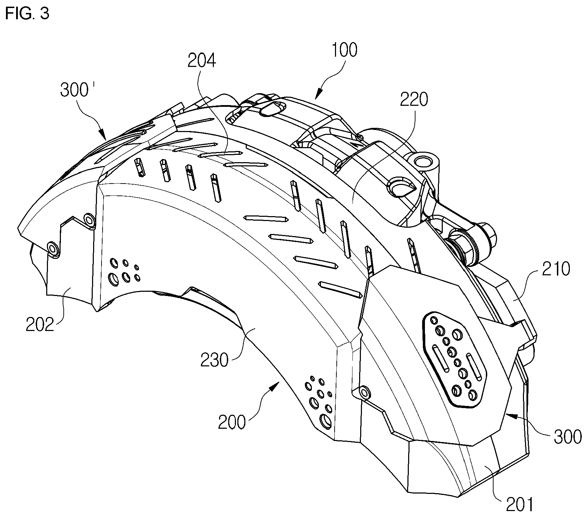

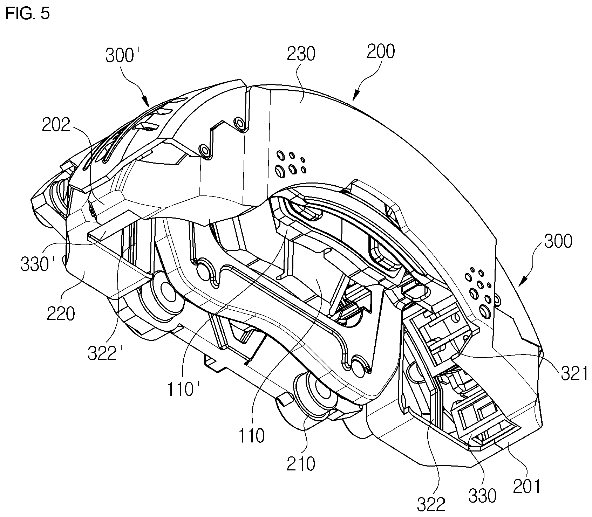

In addition, FIGS. 3 to 5 are a front perspective view, a rear perspective view, and a bottom perspective view, respectively, which illustrate the brake dust collector.

Referring to FIGS. 1 to 5, a brake dust collector according to the present invention includes a brake module 100, a housing 200 provided to cover a part of the brake module 100, and filter modules 300 and 300' detachably provided in the housing 200. Although Figs. 1 to 5 show a first filter module 300 and a second filter module 300', the invention is not limited to this configuration, and there may be provided only one filter module or more than two filter modules.

More specifically, the brake module 100 includes a pair of brake pads 110 and 110' that are respectively disposed on both or opposite sides of a disc D rotating together with a wheel. The brake pads 110, 110' are movable into close contact with or separated from the disc D, i.e., with opposite side or friction surfaces of the disc D, according to a forward and backward movement of a piston. Herein, various driving methods including a hydraulic method and an electromechanical method using a motor may be applied to the forward and backward movementof the piston. The friction surfaces of the disc D define lateral or axial sides of the disc D.

Meanwhile, the housing 200 is formed in a cover shape to cover a part of the brake module 100. For example, the housing 200 may comprise an overall arc shape defining a housing circumferential direction. The housing 200 includes a leading or first portion 201 formed on a first side and a trailing or second portion 202 formed on a second side. Generally, the leading portion 201 and the trailing portion 202 may be spaced to each other along the housing circumferential direction. In addition, the housing 200 includes filter module detachable portions 203 and 203' coupled to the filter modules 300 and 300' in the leading portion 201 and the trailing portion 202, respectively.

As illustrated in FIG. 2, each of the filter module detachable portions 203 and 203' may comprise an opening or hole penetrating the leading portion 201 and the trailing portion 202, respectively. The respective opening may extend along the housing circumferential direction or along a circumferential direction of the disc D. Further, a plurality of seats 203a and 203a' may be provided at an outer circumferential surface of the housing 200 adjacent to the holes in order to attach and detach the filter modules 300 and 300'.

Optionally, the housing 200 may comprise a base bracket 210 fastened to the brake module 100, an inner housing 220 fastened to the base bracket 210, and an outer housing 230 fastened to the inner housing 220.

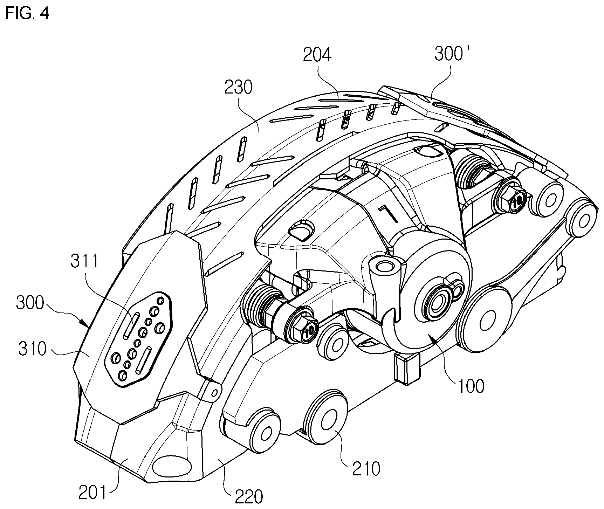

As illustrated in FIGS. 1 and 4, the base bracket 210 is fixed to the brake module 100 by a fastening member such as a bolt and the like. Optionally, the base bracket 210 may be formed to cover only a part of the brake module 100, e.g., the base bracket 210 may be formed to cover a lower portion of a first lateral side of the brake module 100. Thereby, heat generated by the operation of the brake module 100 can be smoothly discharged.

The inner housing 220 has an overall arc shape and is fixed to the base bracket 210 by a fastening member such as a bolt and the like. For example, as shown in Fig. 1, the inner housing may be provided to cover an upper portion of the first lateral side of the brake module 100. Optionally, the inner housing 220 may be formed to expose a part of the brake module 100 so that heat generated by the operation of the brake module 100 can be smoothly discharged.

The outer housing 230 has an arc shape corresponding to the inner housing 220, is fixed to the inner housing 220 by a fastening member such as a bolt and the like, and is provided to cover an upper portion of a second lateral side (opposite to the first lateral side) of the brake module 100.

The filter module detachable portions 203 and 203' may be provided in the leading portion 201 and the trailing portion 202 through the inner housing 220 and the outer housing 230, respectively. In addition, as illustrated in FIGS. 2 and 4, the seats 203a and 203a' may be provided on the outer housing 230 and the inner housing 220, respectively.

Meanwhile, in the housing 200, the base bracket 210 and the inner housing 220 may be integrally formed, or the inner housing 220 and the outer housing 230 may be integrally formed. In addition, in the housing 200, the base bracket 210, the inner housing 220, and the outer housing 230 may all be integrally formed.

Furthermore, the housing 200 may be provided as a monoblock that is integrally formed with a case of the brake module 100.

In addition, the housing 200 may further include a plurality of heat dissipation holes 204 that are provided to penetrate any one or more surfaces excluding the filter module detachable portions 203 and 203' toward the disc D and discharge heat generated when the brake module 100 is operated.

Meanwhile, the filter modules 300 and 300' include filter covers 310 and 310' provided to be detachable from the filter module detachable portions 203 and 203', and at least one or more filters 320 and 320' may be provided inside the filter covers 310 and 310'.

Herein, the filter covers 310 and 310' may have a cover shape formed to entirely cover the filter module detachable portions 203 and 203', in particular, the opening of the respective filter module detachable portion 203 and 203'. Optionally, the filter covers 310 and 310' may include a plurality of filter cover heat dissipation holes 311 and 311' provided to discharge heat generated when the brake module 100 is operated. Herein, the heat dissipation holes 311 and 311' may be utilized not only as exhaust passages of heat but also as fluid passages to induce an air flow according to rotation of the disc D to the filters 320 and 320'.

In addition, the filter covers 310 and 310' may be coupled to and separated from the filter module detachable portions 203 and 203' by an easily detachable fastening member such as a bolt and a pin or a detachable structure such as a rib for fastening and a corresponding groove.

As a means to collect dust that is generated by friction between the brake pads 110 and 110' and the disc D, the filters 320 and 320' are formed to entirely cover the holes of the filter module detachable portions 203 and 203'. The filters 320 and 320', generally, may be positioned within the holes of the filter module detachable portions 203 and 203' or so as to cover the holes of the filter module detachable portions 203 and 203'. The filter covers 310 and 310'may be positioned on the filter module detachable portions 203 and 203' such that they cover the filters 320 and 320'. Hence, the filters 320 and 320' may be provided on an inner side of the filter covers 310 and 310'. Generally, the filters 320, 320' may be positioned to face the disc D. Various shapes and various materials, which are already publicly known, may be applied to realize the filters 320 and 320'. In addition, the filters 320 and 320' may include brackets for fastening to the filter covers 310 and 310' or the housing 200.

In addition, the filters 320 and 320' may be provided using various materials including metals that have durability strong against high-pressured washing liquid flowing into the filter cover dissipation holes 311 and 311' for cleansing and sufficient corrosion resistance and heat resistance against pollutants and hot temperatures.

More specifically, the filters 320 and 320' include main filters 321 and 321' provided in a circumferential direction of the disc D and sub filters 322 and 322' provided at one side or both sides of the disc D. Generally, the main filters 321, 321' may be positioned to face a circumference or circumferential surface of the disc D, and the sub filters 322, 322' may be positioned on one of the lateral or axial sides of the disc D. As exemplarily shown in Fig. 1, the sub filters 322, 322' may be positioned on lateral sides of the main filters 321, 321' with respect to an axial direction extending transverse to the housing circumferential direction.

The main filters 321 and 321' may be detachably provided on inner surfaces of the filter covers 310 and 310'.

In addition, the sub filters 322 and 322' may be detachably fastened to the filter modules 300 and 300' or detachably fastened to the housing 200, e.g., to a side portion of the housing 200. As exemplarily shown in Fig. 1, the sub filters 322 and 322', may be detachably fastened to the side portion of the housing 200 and, when the filter modules 300 and 300' are separated from the housing 200, may be exposed to the outside and detachably provided.

Accordingly, the brake dust collector may not only effectively collect dust generated by friction between the disc D and the brake pads 110 and 110' but also significantly improve maintainability including cleansing and replacement since the filter modules 300 and 300' are provided to be detachable from the housing 200.

Meanwhile, in the brake dust collector, the filter module detachable portions 203 and 203' may be provided in only one of the leading portion 201 and the trailing portion 202, and one of the filter modules 300 and 300' may accordingly be provided to be detachable therefrom.

In addition, since the trailing portion 202 is normally formed to extend lower than the leading portion 201, the filter module detachable portions 203 and 203', which are formed in the leading portion 201 and the trailing portion 202, respectively, may be a little different in shape, and in response thereto, the filter modules 300 and 300' may also be a little different in shape.

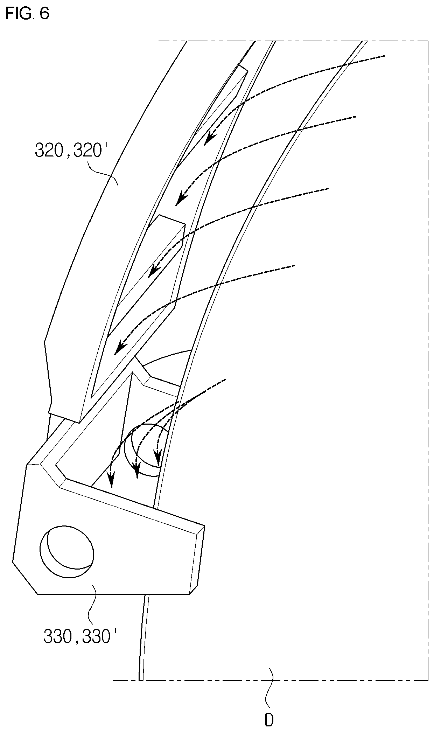

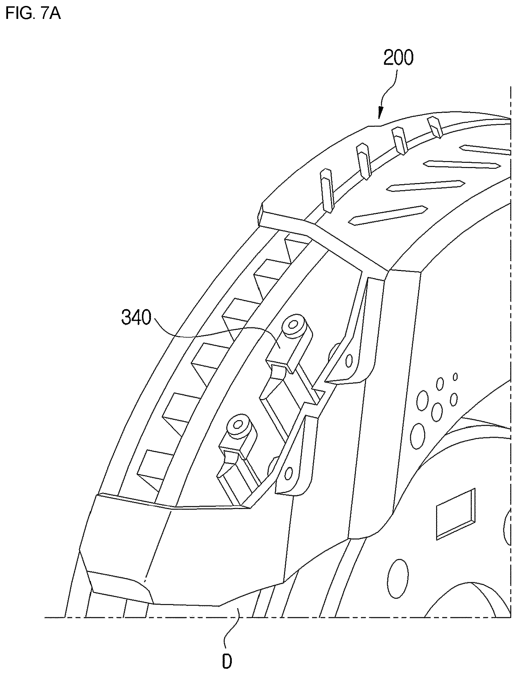

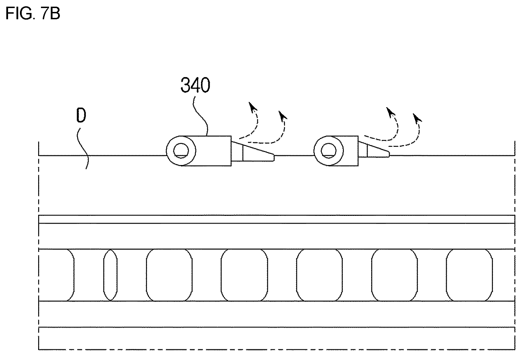

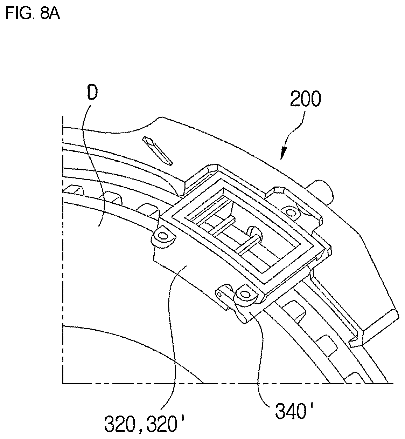

Meanwhile, FIG. 6 is a view illustrating a state where dust is collected by the brake dust collector, FIGS. 7A and 7B are views illustrating an optional guide wing of the brake dust collector and a fluid flow induced or redirected by the guide wing, and FIGS. 8A to 8C are views illustrating the guide wing of the brake dust collector and the fluid flow induced or redirected by the guide wing.

Referring to FIGS. 1 to 8, a further brake dust collector is described as follows.

The filter modules 300 and 300' may further include dust cups 330 and 330' provided at end sides or circumferential ends of the leading portion 201 and the trailing portion 202, respectively.

The dust cups 330 and 330' may have a cup shape with overall top open and are intended to prevent dust not collected by the filters 320 and 320' or dust escaping from the filters 320 and 320' from being finally discharged to the outside of the housing 200. That is, generally, the dust cups 330, 330' may be formed as open containers positioned adjacent to the filters 320, 320' to collect dust escaping from the filters 320, 320'.

Thus, the brake dust collector may further minimize the discharge of dust contained in the air flow, which is generated according to a rotating direction of the disc **D,** as illustrated in FIG. 6, to the outside of the housing 200 through the leading portion 201 or the trailing portion 202.

In addition, the dust cups 330 and 330' may be provided to be fastened to the housing 200 or provided to be fastened to the filter modules 300 and 300' so as to be separable from the housing 200 together with the filter modules 300 and 300'.

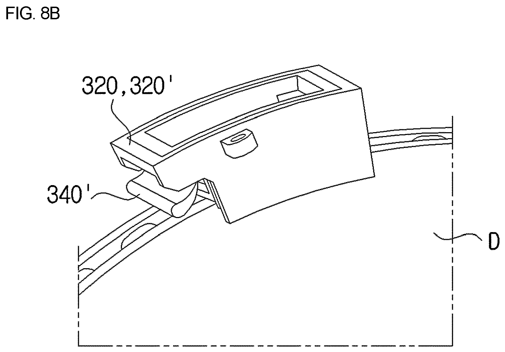

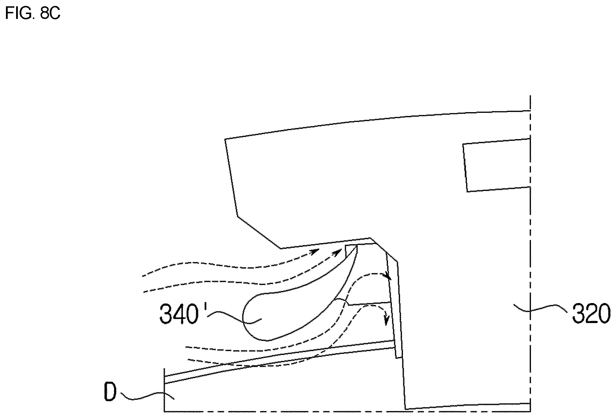

Meanwhile, as illustrated in FIGS. 7 and 8, the filter modules 300 and 300' may further include at least one or more guide wings 340 and 340' that are provided adjacent to a side surface or a circumferential surface of the disc D and configured to induce or direct a fluid flow to the filters 320 and 320'.

More specifically, a guide wing 340, which is provided adjacent to the side surface of the disc D, induces an air flow from one side surface or both side surfaces of the disc D to an inner side of the housing 200 according to a rotating direction of the disc D, as illustrated in FIG. 7B, so that dust contained therein may be effectively collected by the filters 320 and 320'.

A guide wing 340', which is provided adjacent to the circumferential surface of the disc D, may be positioned at one lower side of each of the filters 320 and 320' and induces an air flow from the circumferential surface of the disc D to the filters 320 and 320' according to a rotating direction of the disc D, as illustrated in FIG. 8C, so that dust contained therein may be effectively collected by the filters 320 and 320'.

In addition, the guide wings 340 and 340' may be provided to be angle-adjustable for the filters 320 and 320', respectively and may further improve heat dissipation performance by inducing the air flow generated according to rotation of the disc D to the filter cover heat dissipation holes 311 and 311'. For example, the guide wings 340, 340' may be rotatably mounted and an angle of rotation may be varied relative to a reference position.

Meanwhile, in the brake dust collector according to one embodiment of the present invention, the filter module detachable portions 203 and 203' may be provided in only one of the leading portion 201 and the trailing portion 202, and one of the filter modules 300 and 300' may accordingly be provided to be detachable therefrom.

In addition, in the brake dust collector , each of the filter modules 300 and 300' may include any one of the dust cups 330 and 330' and the guide wings 340 and 340' or include both the dust cups 330 and 330' and the guide wings 340 and 340'.

A brake dust collector according to the present invention can effectively collect dust that is generated by friction between a disc and a brake pad and discharged to the outside of a housing.

A brake dust collector according to the present invention can improve dust collection efficiency by filter modules provided in a leading portion and a trailing portion, respectively.

A brake dust collector according to the present invention can facilitate filter cleaning and replacement and improve maintainability by providing a filter module detachable from a housing.

A brake dust collector according to one embodiment of the present invention can further improve dust collection efficiency by a dust cup that is provided at a lower side of a filter module to finally collect dust discharged to the outside of a housing.

A brake dust collector according to one embodiment of the present invention can further improve dust collection efficiency by a guide wing that is provided inside a filter module to control a fluid flow.

A brake dust collector according to one embodiment of the present invention can prevent aesthetics of a housing from being reduced by a filter module that is separately provided on one side of the housing.

A brake dust collector according to one embodiment of the present invention can further improve heat dissipation performance when exhausting heat caused by friction between a disc and a brake pad to the outside of a housing.

## Claims

1. A brake dust collector comprising:
a brake module (100) including a pair of brake pads (110,110') that are respectively disposed on both sides of a disc and that are in close contact with or separated from the disc according to a forward and backward movement of a piston;
a housing (200) configured to cover a part of the brake module, wherein the housing extends along a circumferential direction of the disc and includes a filter module (300,300') detachable portion
(203,203') formed in at least one of a leading portion and a trailing portion of the housing (200); and
at least one filter module (300,300') detachably fastened to the filter module detachable portion (203,203').

2. The brake dust collector of claim 1, wherein the housing (200) is a monoblock integrally formed with a case of the brake module.

3. The brake dust collector of claim 1, wherein the housing (200) includes a base bracket (210) fastened to the brake module, an inner housing (220) fastened to the base bracket (210), and an outer housing (230) fastened to the inner housing.

4. The brake dust collector of claim 3, wherein the filter module (300,300') detachable portion
(203,203') is formed in the inner housing (220) and the outer housing (230).

5. The brake dust collector of any one of the preceding claims, wherein the filter module
(300,300') comprises:
a filter cover (310,310') detachably fastened to the filter module detachable portion; and
at least one filter positioned on an inner side of the filter cover facing the disk.

6. The brake dust collector of claim 5, wherein one side of the filter cover (310,310') is detachably coupled to one side surface of the housing (200) and the other side of the filter cover is detachably coupled to an opposite side surface of the housing.

7. The brake dust collector of claim 5 or 6 insofar as claim 5 is dependent to claim 3, wherein one side of the filter cover (310,310') is detachably fastened to the outer housing (230) and the other side of the filter cover is detachably fastened to the inner housing (220).

8. The brake dust collector of any one of claims 5 to 7, wherein the filter comprises:
a main filter (320,320') provided at the inner side of the filter cover (310,310') and facing a circumference of the disc; and
a sub filter (322,322') positioned on the inner side of the cover sidewards of the disc

9. The brake dust collector of claim 8 insofar as dependent to claim 3, wherein the sub filter (322,322') is provided on a side of the inner housing (220) on the inner side of the filter cover (310,310').

10. The brake dust collector of claim 8 or 9 insofar as being dependent to claim 3, wherein the sub filter (322,322') is fastened to an inner side of the inner housing (220).

11. The brake dust collector of any one of claims 5 to 10, wherein the filter module
(300,300') further comprises a dust cup (330,330') provided below the filter.

12. The brake dust collector of claim 11, wherein the dust cup (330,330') is fastened to the housing
(200) at an inner end of at least one of the leading portion and the trailing portion.

13. The brake dust collector of any one of claims 5 to 12, wherein the filter module
(300,300') further comprises at least one guide wing (340,340') that is positioned adjacent to a side surface or a circumferential surface of the disc and is configured to direct a fluid flow to the filter.

14. The brake dust collector of claim 13, wherein the guide wing (340,340') is provided to be angle-adjustable relative to the filter.

15. The brake dust collector of the preceding claims, wherein the housing (200) further comprises a plurality of heat dissipation holes (204) provided between the filter module detachable portions.

## Patentansprüche

1. Bremsstaubsammler, umfassend:
ein Bremsmodul (100), das ein Paar Bremsklötze (110, 110') umfasst, die jeweils auf beiden Seiten einer Scheibe angeordnet sind und die entsprechend einer Vorwärts- und Rückwärtsbewegung eines Kolbens in engem Kontakt mit der Scheibe stehen oder von dieser getrennt sind;
ein Gehäuse (200), das dazu ausgebildet ist, einen Teil des Bremsmoduls (100) abzudecken, wobei sich das Gehäuse (200) entlang einer Umfangsrichtung der Scheibe erstreckt und einen Filtermodul(300, 300')-Aufnahmeabschnitt umfasst, der in mindestens einem von einem vorderen Abschnitt und einem hinteren Abschnitt des Gehäuses (200) ausgebildet ist; und
mindestens ein Filtermodul (300), das lösbar an dem Filtermodul-Aufnahmeabschnitt (203, 203') befestigt ist.

2. Bremsstaubsammler nach Anspruch 1, wobei das Gehäuse (200) ein Monoblock ist, der integral mit einem Gehäuse des Bremsmoduls (100) ausgebildet ist.

3. Bremsstaubsammler nach Anspruch 1, wobei das Gehäuse (200) eine Basishalterung (210), die an dem Bremsmodul befestigt ist, ein Innengehäuse (220), das an der Basishalterung (210) befestigt ist, und ein Außengehäuse (230) umfasst, das an dem Innengehäuse befestigt ist.

4. Bremsstaubsammler nach Anspruch 3, wobei der Filtermodul(300, 300')-Aufnahmeabschnitt (203, 203') in dem Innengehäuse (220) und dem Außengehäuse (230) ausgebildet ist.

5. Bremsstaubsammler nach einem der voranstehenden Ansprüche, wobei das Filtermodul (300, 300') aufweist:
eine Filterabdeckung (310, 310'), die lösbar an dem Filtermodul-Aufnahmeabschnitt befestigt ist; und
mindestens einen Filter, der an einer der Scheibe zugewandten Innenseite der Filterabdeckung positioniert ist.

6. Bremsstaubsammler nach Anspruch 5, wobei eine Seite der Filterabdeckung (310, 310') lösbar mit einer Seitenfläche des Gehäuses (200) gekoppelt ist und die andere Seite der Filterabdeckung lösbar mit einer gegenüberliegenden Seitenfläche des Gehäuses gekoppelt ist.

7. Bremsstaubsammler nach Anspruch 5 oder 6, sofern Anspruch 5 von Anspruch 3 abhängig ist, wobei eine Seite der Filterabdeckung (310, 310') lösbar an dem Außengehäuse (230) befestigt ist und die andere Seite der Filterabdeckung lösbar an dem Innengehäuse (220) befestigt ist.

8. Bremsstaubsammler nach einem der Ansprüche 5 bis 7, wobei der Filter aufweist:
einen Hauptfilter (320, 320'), der an der Innenseite der Filterabdeckung (310, 310') vorgesehen ist und einem Umfang der Scheibe zugewandt ist; und
einen Nebenfilter (322, 322'), der an der Innenseite der Abdeckung (310, 310') seitlich von der Scheibe positioniert ist.

9. Bremsstaubsammler nach Anspruch 8, sofern abhängig von Anspruch 3, wobei der Nebenfilter (322, 322') an einer Seite des Innengehäuses (220) an der Innenseite der Filterabdeckung (310, 310') vorgesehen ist.

10. Bremsstaubsammler nach Anspruch 8 oder 9, sofern abhängig von Anspruch 3, wobei der Nebenfilter (322, 322') an einer Innenseite des Innengehäuses (220) befestigt ist.

11. Bremsstaubsammler nach einem der Ansprüche 5 bis 10, wobei das Filtermodul (300, 300') ferner einen Staubbecher (330, 330') aufweist, der unterhalb des Filters vorgesehen ist.

12. Bremsstaubsammler nach Anspruch 11, wobei der Staubbecher (330, 330') an dem Gehäuse (200) an einem inneren Ende von mindestens einem von dem vorderen Abschnitt (201) und dem hinteren Abschnitt (202) befestigt ist.

13. Bremsstaubsammler nach einem der Ansprüche 5 bis 12, wobei das Filtermodul (300, 300') ferner mindestens einen Führungsflügel (340, 340') aufweist, der benachbart zu einer Seitenfläche oder einer Umfangsfläche der Scheibe positioniert ist und dazu ausgebildet ist, einen Fluidstrom zu dem Filter zu leiten.

14. Bremsstaubsammler nach Anspruch 13, wobei der Führungsflügel (340, 340') dazu vorgesehen ist, relativ zu dem Filter winkelverstellbar zu sein.

15. Bremsstaubsammler nach den voranstehenden Ansprüchen, wobei das Gehäuse (200) ferner eine Vielzahl von Wärmeableitungslöchem (204) aufweist, die zwischen den Filtermodul-Aufnahmeabschnitten vorgesehen sind.

## Revendications

1. Récupérateur de poussière de frein, comprenant :
un module de frein (100) comprenant une paire de plaquettes de frein (110, 110') disposées de part et d'autre d'un disque et en contact étroit avec le disque ou séparées du disque en fonction du déplacement vers l'avant et vers l'arrière d'un piston ;
un carter (200) prévu pour recouvrir une partie du module de frein, ledit carter s'étendant dans la direction circonférentielle du disque et comprenant une partie amovible (203, 203') de module de filtre (300, 300') formée dans une partie avant et/ou une partie arrière du carter (200) ; et
au moins un module de filtre (300, 300') est fixé de manière amovible à la partie amovible (203, 203') de module de filtre.

2. Récupérateur de poussière de frein selon la revendication 1, où le carter (200) est un monobloc formé d'un seul tenant avec un boîtier du module de frein.

3. Récupérateur de poussière de frein selon la revendication 1, où le carter (200) comprend un support de base (210) fixé au module de frein, un carter intérieur (220) fixé au support de base (210), et un carter extérieur (230) fixé au carter intérieur.

4. Récupérateur de poussière de frein selon la revendication 3, où la partie amovible (203, 203') de module de filtre (300, 300') est formée dans le carter intérieur (220) et le carter extérieur (230).

5. Récupérateur de poussière de frein selon l'une des revendications précédentes, où le module de filtre (300, 300') comprend :
un couvercle de filtre (310, 310') fixé de manière amovible à la partie amovible de module de filtre ; et
au moins un filtre disposé sur une face intérieure du couvercle de filtre opposée au disque.

6. Récupérateur de poussière de frein selon la revendication 5, où un côté du couvercle de filtre (310') est raccordé de manière amovible à une surface latérale du carter (200), et l'autre côté du couvercle de filtre est raccordé de manière amovible à une surface latérale opposée du carter.

7. Récupérateur de poussière de frein selon la revendication 5 ou la revendication 6, si la revendication 5 est dépendante de la revendication 3, où un côté du couvercle de filtre (310, 310') est fixé de manière amovible au carter extérieur (230), et l'autre côté du couvercle du filtre est fixé de manière amovible au carter intérieur (220).

8. Récupérateur de poussière de frein selon l'une des revendications 5 à 7, où le filtre comprend :
un filtre principal (320, 320') disposé sur la face intérieure du couvercle de filtre (310, 310') et opposé à la circonférence du disque ; et
un filtre secondaire (322, 322') disposé sur la face intérieure du couvercle, latéralement au disque.

9. Récupérateur de poussière de frein selon la revendication 8, si dépendante de la revendication 3, où le filtre secondaire (322, 322') est disposé sur un côté du carter intérieur (220) sur la face intérieure du couvercle de filtre (310, 310').

10. Récupérateur de poussière de frein selon la revendication 8 ou la revendication 9, si dépendante de la revendication 3, où le filtre secondaire (322, 322') est fixé à une face intérieure du carter intérieur (220).

11. Récupérateur de poussière de frein selon l'une des revendications 5 à 10, où le module de filtre (300, 300 )) comprend en outre une coupelle à poussière (330, 330 ) prévue sous le filtre.

12. Récupérateur de poussière de frein selon la revendication 11, où la coupelle à poussière (330, 330') est fixée au carter (200) à une extrémité intérieure de la partie avant et/ou de la partie arrière.

13. Récupérateur de poussière de frein selon l'une des revendications 5 à 12, où le module de filtre (300, 300') comprend en outre au moins une ailette de guidage (340, 340') adjacente à une surface latérale ou à une surface circonférentielle du disque, et prévue pour diriger un flux de fluide vers le filtre.

14. Récupérateur de poussière de frein selon la revendication 13, où l'ailette de guidage (340, 340') est prévue de manière à être ajustable angulairement par rapport au filtre.

15. Récupérateur de poussière de frein selon les revendications précédentes, où le carter (200) comprend en outre une pluralité de trous de dissipation thermique (204) prévus entre les parties amovibles du module de filtre.
